# EUROPEAN PATENT APPLICATION

(11) **EP 1 835 661 A1**
(43) Date of publication of application: **19.09.2007**
(21) Application number: 06005097.8
(22) Date of filing: 13.03.2006
(51) Int. Cl.: H04L 12/28

(54) **Mobile terminal assisted peer-to-peer based self organisation of attachment points**

(71) Applicant: NOKIA SIEMENS NETWORKS GMBH & CO. KG, 81541 München (DE)
(72) Inventor: Andersen, Frank-Uwe, 10625 Berlin (DE); Caviglione, Luca, CAP 16142 Genova (IT); Davoli, Franco, CAP 16154 Genova (IT); Hoßfeld, Tobias, 97074 Würzburg (DE); Oechsner, Simon, 97218 Gerbrunn (DE); Trangia, Phuoc, Prof. Dr., 97076 Würzburg (DE); Tutschku, Kurt, Dr., 97218 Gerbrunn (DE)

(57) **Abstract**

Method for establishing a connection between at least two nodes (100, 200) in a communications system (1000) comprising the steps of:
- joining, by a first node (100) of said at least two nodes (100, 200), an overlay network;
- broadcasting, upon joining said overlay network by said first node (100) of a node identifier (ID) in said communications system (1000);
- forwarding, upon reception of said broadcast by a mobile station (10) of said node identifier (ID) to a second node (200) of said at least two nodes, said second node (200) acting as an attachment point of said mobile station (10);
- establishing, by said second node (200) upon reception of said node identifier (ID) of said connection over said overlay network to said first node (100).

## Description

### Field of the invention

The invention is used in communications systems to ensure that attachment points build partner relationships between themselves and establish connections in a simply and efficient manner.

### Summary of the invention

Communications systems today, comprise of different networking and access technologies. These technologies are not fully integrated nor are they optimised to take into account other existing technologies.

In particular, for mobile communications beyond 3G (3^{rd} Generation), heterogeneous access systems are expected, including but not limited to IEEE (Institute of Electrical and Electronics Engineering) standards 802.11, 802.15, 802.16, Flash-OFDM (Flash Orthogonal Frequency Division Multiplexing),802.20, 2.5G (2.5 Generation) and 3G based wireless access systems, as well as fixed wireless access systems such as ISDN (Integrated Services Digital Network) or DSL (Digital Subscriber Line) for fixed mobile convergence.

In this access system landscape, an operator will likely have a much larger network managed overhead especially for access systems with low range resulting in a number of additional attachment points within an access system, at least in highly populated areas. The terms "attachment point", "attachment node" "node", are equivalent and are used interchangeably in the application.

Operations such as handovers between APs (attachment points) of different access technologies or even between the same access technology, require deep cooperation and result in an increased network management overhead. In today's monolithic technology used in access systems, for example 2.5, 3G access systems, are thoroughly planned and configured in advance, which is expensive and tedious. It is assumed that handovers within the same access technology are optimised. One option for optimising handover management is to exploit measurements performed by mobile devices (MD) or mobile stations (MS) or user equipment (UE).

APs need to have information about which other APs they have to contact when a handover is required, irrespective of whether the handover is controlled by a central network element/device or by a MS initiating the handover. These relationships of APs with one another can not easily be identified or planned beforehand in heterogeneous access systems. Particularly so for moving APs or APs that are frequently reconfigured.

This complex emerging network scenario poses several challenges. The expenditures for managing and configuring such a complex system are significant. Moreover, today's users ask for sophisticated services and at the same time seek for the concept of "anytime-anywhere" and particularly in a transparent, seamless way. Hence, a heterogeneous beyond 3G communications network must be able to detect faults and reconfigure itself with low effort and with affordable technologies. Moreover, the increase in the number of MSs present creates new issues, for example in providing and maintaining the availability of several services in the same area. In such a case, new management or configuration systems need to be designed and integrated which can handle such dynamics, thus increasing the complexity and cost of such networks.

In traditional network management for communication networks and in particular mobile networks, all nodes have to be entered into a highly hierarchic and centralised network management system (NMS). An element manager (EM) in the NMS configures the individual APs and periodically polls them for status information. Via the communication path between the EM and each AP, the EM manages the APs, i.e. the network knows about the operating state, load, the static configuration, the location, the name assigned, the ID (identity), the network address such as an IP (internet protocol) address for each AP. The EM also holds information regarding which surrounding or neighbouring cells each AP maintains a handover relationship with. Identifying the involved neighbourhood cells is a task which is not automated today. It requires input from mobile network planning and extensive measurements.

Additionally, as all APs communicate with the EM an increase in the signalling will occur, reducing the capacity of the communications system to transmit other data. The efficiency of the whole communications system is thus reduced.

Furthermore, it is a necessary requirement for the EM to have adequate storage resources, for example a database, capable to maintain all the different configurations and/or polling information received and adequate processing capacities to retrieve and analyse all stored information. As the number of APs increases within a communications system, so will the amount of stored information increase, requiring a large investment in hardware storage facilities, as well as processing power in order to be able to generate information and manage a number of APs.

Additionally, as the different transmitted messages have to travel through the communications system, the time required to gather all of them at them EM greatly reduces the possibility of a fast update from the EM to APs. The fact that a large number of hops are required for messages to reach a destination further reduces system efficiency.

Furthermore, the EM being centrally located constitutes a SPF (Single Point of Failure) and so redundancy is required in order to ensure that in case of a failure the mechanism will still function. This redundancy also increases the amount of hardware investment required. Moreover, as there will exist at least two such entities, one being active and the other one in standby mode, synchronisation of the stored data such as configurations, polling information, must be performed regularly, further increasing signalling, processing requirements and time delays.

This solution is also not adaptable to an increase of APs, therefore in order to compensate for an eventual increase in the number present, over-dimensioning is necessary, resulting in a waste of resources and increasing the amount of cash investment needed. Additionally, high requirements in terms of bandwidth for the synchronisation of remote APs, for example at the outer edges of a communications system, are also necessary, in order to ensure that messages can reach these APs.

A need therefore exists for a more flexible network that is able to find potential handover partners within a certain proximity of an AP as quickly as possible, create a partner relationship between them and in general be able to act in a self-organising manner, without the need of a centralised NMS. A further need exists for a network that supports efficient handover procedures without requiring predefined information retrieved through dedicated network planning, but which can reliably and quickly react to changes in different access systems, for example because of dynamically added network nodes, failure of network nodes, moving network nodes or changes in network configurations, present in a communications network.

US 2002/044533 discloses the aspect of finding an optimal transmission power in a distributed network topology by a network node, by using received signals from neighbouring nodes.

WO 2003/096632 improves the routing within a system by using topology information and distributing network parameters via a spanning tree algorithm to different APs. The routing is improved as the amount of traffic required to distribute the network parameters is reduced.

With the present invention, the above mentioned issues are resolved. The proposed technique allows for

The technique is achieved by the teachings contained in the independent method and apparatus claims.

Said method establishes a connection between at least two nodes in a communications network comprising the steps of:
- joining, by a first node of said at least two nodes an overlay network;
- broadcasting, upon joining said overlay network by said first node of a node identifier in said communications network;
- forwarding, upon reception of said broadcast by a mobile terminal of said node identifier to a second node of said at least two nodes, said second node acting as an attachment point of said mobile terminal;
- establishing, by said second node upon reception of said node identifier of said connection over said overlay network to said first node.

Said apparatus comprises means arranged to perform the method of claim 1.

The inventive technique is advantageous in that it enables nodes within a communications system to self-organise themselves in a structured manner though joining an overlay network, allowing nodes to accelerate data retrieval and forming of partner relationships due to the establishment of direct connections between nodes.
In the event of changes within the architecture of a communications system, the inventive technique allows for a prompt reaction and update of the partner relationships. Once two nodes have established a connection over the overlay network, control signalling is maintained between them. If one node stops functioning for any reason, the control signals will stop, thus alerting the other partner node faster than having to wait for a NMS to observe the failure. In this way, a node can update its partner relationships a lot faster instead of having to wait for a message transmitted from a NMS.
An additional advantage is that the inventive technique allows for the presence of nodes appearing in a communications system to be propagated a lot faster within the communications system. In the event of adding more nodes to an existing system allowing for an increase in the number of MS being handled, the presence of these nodes is made known in a very short time.
The use of an overlay network, wherein all nodes are seen by other nodes as peer to peer nodes, simplifies the handling of churn, whereby nodes fail and/or join the communications system, and provides for a better way for managing such a system instead of relying on a centralised NMS.
As the inventive technique removes the need of a central NMS, the need for a specialised EM and of any redundant EMs is also removed; the cost of a communications system is reduced. Signalling is kept within a small area of the communications system i.e. local signalling, instead of signalling through the whole communications system, thus reducing traffic and waste of resources and increasing the efficiency of the system as a whole.

Further advantages can be seen in the dependent claims, wherein:

Preferably the at least two nodes are neighbouring nodes, thus establishing a direct connection, whereby further information between the at least two nodes can be exchanged. Preferably, the further information relates to a handover, allowing each node to build up a picture of the possibilities of performing a handover to its neighbour.
Preferably the mobile terminal transmits a message containing a flag to the second node, the flag indicating a presence of the node identifier and upon reception of a polling request from the second node forwarding the received broadcasted message, thus enabling the second node to learn of the existence of the first node.
Preferably, increasing or decreasing a number of instances of transmitting said polling request depends on a rate of change of a number of nodes joining said overlay network, thus keeping transmitted traffic between a node and a mobile station low and reducing the wasting of radio resources. Preferably the node identifier is stored for a duration of time that the node is part of the overlay network, thus allowing a more effective network management.

### Short description of the drawings

The present invention will become more apparent from the description given herein below and from the accompanying drawings which are given by way of illustration only, and thus are not limitative of the present invention, and wherein:
Fig. 1 depicts a communications system wherein an attachment point joins an overlay network.
Fig. 2 depicts the steps executed by the technique in order to allow two attachment points to set up communication between them.
Fig. 3 depicts the different means that are adapted to execute the steps of the technique in order to allow two attachment points to set up communication between them.

### Detailed description of the invention

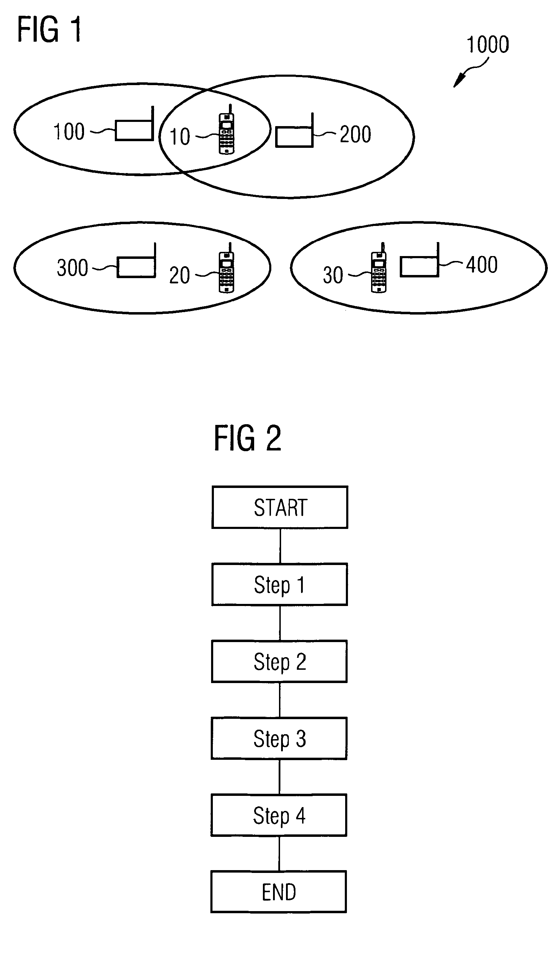

Fig. 1 depicts a communications system 1000, in particular a mobile communications system, which uses one of the following technologies: a 2G (2 Generation), a 2.5G (2.5 Generation), a 3G (3 Generation), a 3.5G (3.5 Generation), a 4G (4 Generation).

It comprises of numerous APs (attachment points) or nodes 100, 200, 300, 400 and numerous mobile stations 10, 20, and 30. The mobile communications system, provides for communications to be set-up between mobile stations and/or between mobile stations and other communications systems, such as PSTNs (Private Switched Telephone Networks) and/or Internet networks. The communications set-up carry different types of data such as voice data, audiovisual data, packet data etc. The APs or nodes can one of the following: a BSC (Base Station Controllers), a RNC (Radio Network Controllers), an access point for WLANs (wireless local area networks). Mobile station 10 is connected to AP 200, which is its serving AP, and they communicate over a dedicated channel.

Fig. 2 depicts the steps taken when an AP 100 joins communications system 1000, for example after being commissioned into service or after a reboot, it will automatically join an overlay network, which is a logical network formed by all APs 200, 300, 400 already present in communications system 1000 (step 1).
Upon joining the overlay network, AP 100 will broadcast a node identifier (ID) which is unique ID for each AP (step 2).

Each AP is pre-programmed upon joining communications system 1000 to join the overlay network. In order to join the overlay network, each AP needs an ID in order for it to be identifiable within the overlay network.

The ID can be acquired either by requesting for an ID from a pre-programmed address corresponding to a node (not shown in fig. 1) in the communications system 1000 that receives such requests, generates an ID and then transmits it back to the requesting AP, or by the AP generating its own random ID, if no such address is pre-programmed, based on its own address for example its own IP (internet protocol) or MAC (Media Access Control) address, or by using its position reference and type of access technology used to generate the ID. The position reference comprises of a 2-coordinate position reference in a format (x, y) or a 3-coordinate position reference in a format (x, y, z). Where x corresponds to a latitude reference of the position of the AP, y to a longitude reference of the position of the AP and z to the height at which the AP is. This position reference can be found by the AP using GPS (Global Positioning System), a-GPS (assisted-Global Positioning System) or cell information or using a combination of them.
In such a case the node receiving the request for an ID, will return a message to the AP 100 indicating that the AP 100 has to generate its own ID.

Each AP, depending on the system design implemented by an operator, is arranged to use one or a combination of the above ways for acquiring an ID. Furthermore, the generated IDs conform to the addressing format used in the overlay network, which can be a 160 bit SHA-1 (secure hash algorithm-1) hash address, defined in the "Secure Hash Standard, FIPS PUB 180-1, 17-04-1995" or another addressing scheme.

The ID is broadcasted by the AP 100 similarly to SSIDs (Service Set Identifiers) via a broadcast message. Such a broadcasted message can be received by an MS 10, which upon reception forwards the message to its serving AP (or serving node) 200 (step 3).

As in SSIDs, the ID is attached to the broadcasted message, this being usually a broadcasted packet. MS 10 and all other MSs are designed to recognise the received broadcasted message as being a message from an AP, by the aid of the addressing format of the ID.

Once AP 200 has received the message, it will then use the ID identifying AP 100 within the overlay network to set up a connection with AP 100 (step 4). Naturally, upon reception of the message AP 200 will save the information relating to AP 100. This information can be saved in, for example, a routing table that contains all neighbour relationships or in a database. Furthermore the ID is stored for the duration of time that the AP is part of the overlay network. This is possible through the use of control signalling that are transmitted between the two APs 100, 200. As long as control signalling is received indicating that the AP is active, the receiving AP maintains the ID. In case of a departure from the overlay network, the AP departing transmits a message indicating its departure so that the partner AP can delete the corresponding ID and the partner relationships set up. In the case of failure, a lack of reception of a control signal from an AP within a predetermined time period will trigger an AP to delete the corresponding ID any partner relationships already set up.

In this way, APs can quickly become aware of the presence of neighbouring APs, as information is quickly received by APs. Instead of the information being forwarded to a central device e.g. a NMS (Network Management System) device, which in turn then broadcasts the information onto communications system 1000, entailing a longer period of time and numerous hops for the information to reach APs. Using the inventive technique, within two hops, i.e. AP 100 to MS 10 and MS 10 to AP 200, the information is received by an AP. Thus greatly reducing the time and the number of hops required for the propagation of the information. Furthermore, in this way, connections can then be set up quickly and handover partnerships created between APs.

In a further refinement of the inventive technique, once AP 200 has received the information of the presence of new AP 100 and has set up a connection via the overlay network, it can on its own accord then forward the information relating to AP 100 to other APs which neighbour it and with which partner relationships have already been set-up.
An AP such as 300, which is a neighbour of AP 200 and has an existing partner relationship with AP 200, can upon receiving a message from AP 200 relating to newly joined AP 100, in turn save it and update its own routing table for example and using the ID set-up a connection via the overlay network to AP 100.

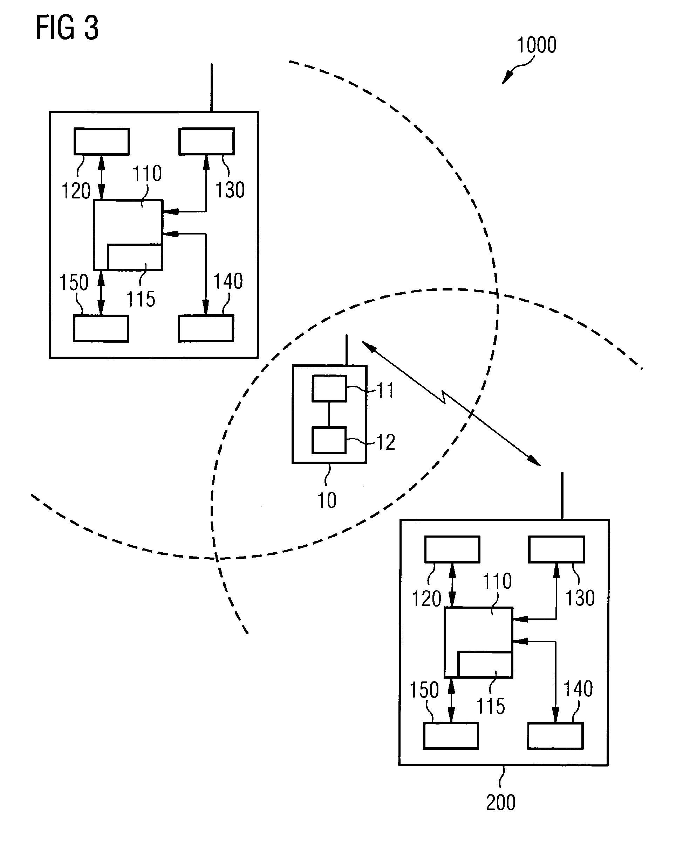

Fig. 3 depicts the different means arranged to execute the technique. Fig. 3 depicts a similar communications system 1000 and comprises of the same apparatuses as fig. 1, however for reasons of clarity only three such apparatuses are shown.

Each AP 100, 200 comprises of control means 110 arranged to control the functioning of the AP. Control means 110, further comprise of memory means 115 wherein a pre-programmed address is stored that is used to request an ID upon joining communications system 1000. APs also comprise of transmit/receive means 120 adapted to transmit and receive messages on broadcast and/or dedicated channels, position reference means 130 adapted to provide an AP with a positional reference as previously described. ID generator means 140 are adapted to generate an ID for the AP and are coupled to the control means 110, when the AP is told to generate its own ID. Also coupled to control means 110 are means 150 comprising of entries indicating the different partner relationships formed by the AP, such as a routing table or a database.

When AP 100 joins communications system 1000, for example after being commissioned into service or after a reboot, control means 110 will automatically join an overlay network, formed by APs already present in communications system 1000. Control means 110 will do this by retrieving from memory means 115 the address such as an IP address, of a node to which it must contact, via the transmit/receive means 120, in order to acquire an ID and at the same time performing a bootstrap.

In the case that no such address exists, the control means 110 are arranged to generate a random ID on its own using the ID generator means 140. In the event that its position reference is used as part of the generated ID, the position reference means 130 are used to generate the position reference.
Upon joining the overlay network, AP 100 will broadcast the ID via the transmit/receive means 120, similarly to SSIDs.

MS 10 comprising of transmit/receive means 11 coupled to control means 12 and being in communication with its serving AP 200, upon reception over a broadcast channel of the broadcasted message from AP 100 and recognition that the message is from an AP, will in turn forward the message via transmit/receive means 11 to its serving AP 200.

Once AP 200 has received the message via transmit/receive means 120, the controller means 110 will use the ID identifying AP 100 within the overlay network to set up a connection with AP 100. The ID is then stored in means 150 of AP 200. The same controller means 110 will also set up a connection to AP 100 using transmit/receive means 120 and set up a partner relationship with AP 100, allowing for handover procedures to be effected.

As stated previously, in a further refinement of the inventive technique, once AP 200 has received the information of the presence of new AP 100 and has set up a connection via the overlay network, controller means 110 can then forward the information relating to AP 100, using transmit/receive means 120, to other APs which neighbour it and with which partner relationships have already been set-up. The information indicating neighbouring APs and partner relationships formed are stored in means 150 and are retrieved from there by the controller means 110.

In a further refinement of the inventive technique, during the procedure for joining the overlay network (bootstrapping) is combined with an authorisation request to increase the security of the overlay network. Again the controller means 110 of AP 100 retrieves an address such as an IP address or a name of a node or a list of other peer nodes to be queried in a specific order that an authorisation request is to be sent to. This node can be identical with the node that provides the ID to AP 100 or it can be a dedicated login server or in the case of list of peer nodes, other nodes 200, 300, 400 that are pre-configured to act as authorising nodes. Flooding the overlay network with an authorisation request is disadvantageous, as it would create an increase of traffic and waste of resources, as well as posing a security threat to the communications system.

In a further refinement of the inventive technique, in order to reduce the amount of traffic transmitted between MS 10 and its serving node AP 200 thus preserving system resources such as radio bandwidth, MS 10 can upon reception of the broadcasted message from AP 100 instead of forwarding the broadcast message with the ID of AP 100, it transmits a message containing a flag indicating the presence of an ID. AP 200, upon receiving the flag, can either transmit a polling request to MS 10 which upon reception of it forwards the broadcasted message, or differ the polling request for a later time or even ignore it.

When transmitting or differing the polling request, an AP can take into account a rate of change of the number of nodes that have joined the overlay network. Each AP keeps track of APs that have joined the overlay network, either from receiving an ID from an MS or from other neighbouring APs. Depending on whether the rate of change of the number of nodes joining the overlay network, an AP, for example AP 200, can increase or decrease a number of instances of transmitting the polling request. In the event that a few nodes have joined the overlay, AP 200 will then transmit the polling request whenever it receives a flag, in order to build its partner relationships. In the event that many nodes join the overlay network, AP 200 can then reduce the number of polling requests transmitted, as its partner relationships are already formed and transmitting such polling requests would be a waste of resources. Additionally, AP 200 can use a learning algorithm in order to decide when to transmit a polling request. For example, it can decide only to request a polling from a certain percentage of the MSs that have transmitted a flag. This percentage being equal to a number of MSs that are being served by AP 200 and whose signal strength carrying the message with the flag is above a certain value, or that the number of MSs are MSs that have transmitted such a message for the first time or for the first time after a specified time period has elapsed since a previous transmission of a flag or are located within a specified area of coverage (cell) that AP 200 provides, such as around the borders of the cell. Depending on the configuration of an AP, one or a combination of the above ways, are employed.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method establishing a connection between at least two nodes (100, 200) in a communications system (1000) comprising the steps of:
- joining, by a first node (100) of said at least two nodes (100, 200), an overlay network;
- broadcasting, upon joining said overlay network by said first node (100) of a node identifier (ID) in said communications system (1000);
- forwarding, upon reception of said broadcast by a mobile station (10) of said node identifier (ID) to a second node (200) of said at least two nodes, said second node (200) acting as an attachment point of said mobile station (10);
- establishing, by said second node (200) upon reception of said node identifier (ID) of said connection over said overlay network to said first node (100).

2. Method according to claim 1, wherein said at least two nodes (100, 200) are neighbouring nodes.

3. Method according to claim 1, wherein said connection is a direct connection used for exchanging further information between said at least two nodes (100, 200).

4. Method according to claim 3, wherein said further information relates to a handover.

5. Method according to claim 1, wherein said mobile station (10) transmits a message containing a flag to said second node (200), said flag indicating a presence of said node identifier (ID) and upon reception of a polling request from said second node (200) performing said forwarding.

6. Method according to the claim 5, wherein increasing or decreasing a number of instances of transmitting said polling request is dependant on a rate of change of a number of nodes joining said overlay network.

7. Method according to claim 1, wherein said node identifier (ID) is stored for a duration of time that a node is part of said overlay network.

8. Apparatus (100, 200, 300, 400) comprising means arranged to perform the steps of claims 1 to 7.

9. Apparatus (100, 200, 300, 400) according to claim 8, wherein said apparatus is one of the following:
a base station controller, a radio network controller, an access point.

10. Communications system (1000) comprising at least two apparatuses according to claims 8 to 9.

11. Communications system (1000) according to claim 10, wherein said communications system (1000) is a mobile communications system.

12. Communications system (1000) according to claim 11, wherein said mobile communications system uses one of the following technologies:
a 2G, a 2.5G, a 3G, a 3.5G, a 4G.
